# EUROPEAN PATENT SPECIFICATION

(11) **EP 3 835 633 B1**
(45) Date of publication and mention of the grant of the patent: **04.06.2025**
(21) Application number: 20212542.3
(22) Date of filing: 08.12.2020
(51) Int. Cl.: F16K 11/085, B60R 15/00, F16K 31/53, F16K 5/04

(54) **LIGHT WEIGHT, MULTIFUNCTIONAL VALVE ASSEMBLY**
LEICHTE MULTIFUNKTIONALE VENTILANORDNUNG
ENSEMBLE DE VANNE MULTIFONCTIONNEL ET LÉGER

(30) Priority: 12.12.2019 US 201962947146 P; 02.11.2020 US 202017086492
(43) Date of publication of application: 16.06.2021
(73) Proprietor: Thetford BV, 4879 AP Etten-Leur (NL)
(72) Inventor: VAN RIEL, Didier Henricus Johannes, 4879 AP Etten-Leur (NL); VAN DE SANDE, Mitchell Marcus Gerardus Maria, 4879 AP Etten-Leur (NL); WESSELS, Wilco, 4879 AP Etten-Leur (NL); KIEBOOM, Thomas Cornelis Johannes, 4879 AP Etten-Leur (NL); VAN DEN HEIJKANT, Ruud, 4879 AP Etten-Leur (NL)
(74) Representative: Kordel, Mattias

(56) References cited:
- EP-A1- 3 550 189
- JP-U- H0 549 027
- US-A- 3 916 950
- US-A1- 2015 000 325
- US-A1- 2016 003 490
- US-A1- 2016 010 536
- US-A1- 2018 354 432

## Description

### CROSS REFERENCE TO RELATED APPLICATION

This application claims the benefit of U.S. Provisional Patent Application No. 62/947,146 filed 12 December 2019.

### FIELD

The present disclosure relates to a lightweight, multifunctional valve assembly.

### BACKGROUND

The statements in this section merely provide background information related to the present disclosure and may not constitute prior art.

Various types of valves are known for controlling the flow of fluid (including gases, liquids fluidized solids and slurries) by selectively opening and closing passageways. Within system having multiple fluid flows that need to be opened and closed, each fluid flow may be associated with an individually controlled valve. Alternatively, it is generally known to provide a common valve assembly for controlling multiple fluid flows. Such valve assemblies may be generally referred to as multifunctional valve assemblies.

While known valve assemblies, including common valve assemblies for controlling multiple fluid flows, may have proven to be successful for their intended purposes, known assemblies are associated with disadvantages and limitations. For example, material used in known valve assemblies, including but not limited to electric ball valves, increase the weight of the valve assembly. Additionally, each valve or each multi-functional valve is associated with a motor, again increasing the weight and complexity of systems including multiple valves. Accordingly, a continuous need for improvement remains in the pertinent art to address the noted and additional disadvantages and limitations associated with known valve assemblies.

US2018/354432A1 discloses a valve assembly according to the preamble of claim 1.

### SUMMARY

It is an object of the present teachings to provide a multifunctional valve assembly with reduced weight.

According to the invention, the multifunctional valve assembly, as defined by independent claim 1, includes a first portion for controlling at least two fluid flows and a second portion for controlling at least two fluid flows, the first and second portions operated by a single motor.

It is another object of the present teachings to provide a multifunctional valve assembly associated with reduced operation times for the switching of valve positions.

It is also an object of the present teachings to provide a multifunctional valve assembly incorporating an integrated and replaceable filter.

Still further objects of the present teachings will become apparent below.

In accordance with the claimed invention, the multifunctional valve assembly includes a first portion with a first 3-way valve functionality for selectively controlling flow of a first fluid and a second portion with a second, 3-way functionality valve functionality for selectively controlling flow a second fluid. The multifunctional valve assembly further includes a common motor associated with the first and second portions and operative to drive both of the first and second portions to operate in first, second and third operational modes.

In accordance with another particular aspect, the present teachings provide a method of operating a multifunctional valve assembly including rotating a first sleeve about an axis of the first sleeve with a common motor to concurrently drive first and second portions of the valve assembly to each operate in first, second and third operational modes..

### BRIEF DESCRIPTION OF THE DRAWINGS

The drawings described herein are for illustration purposes only and are not intended to limit the scope of the present disclosure in any way.
Figure 1 is a front view of a lightweight, multifunctional valve assembly constructed in accordance with the present teachings.
Figure 1A is a front view similar to Figure 1 illustrating an alternative embodiment in which valve assembly is shown incorporated into a larger assembly including a filter assembly.

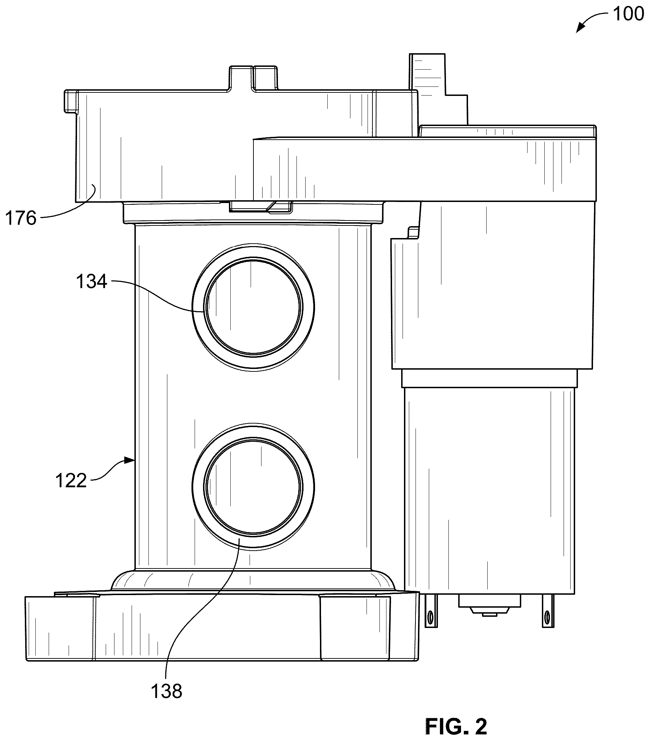

Figure 2 is a side view of a portion of the lightweight, multifunctional valve assembly of Figure 1.
Figure 3 is an exploded view of the lightweight, multifunctional valve assembly and filter assembly of Figure 1A.
Figure 4 is cross-sectional view taken along the line 4-4 of Figure 1A.

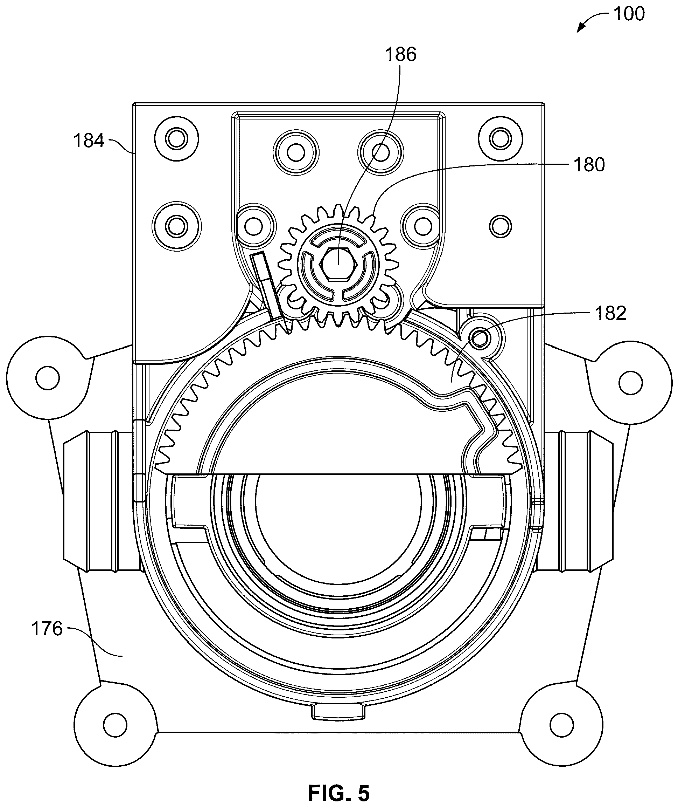

Figure 5 is a partially cut away view of the lightweight, multifunctional valve assembly of Figure 1.

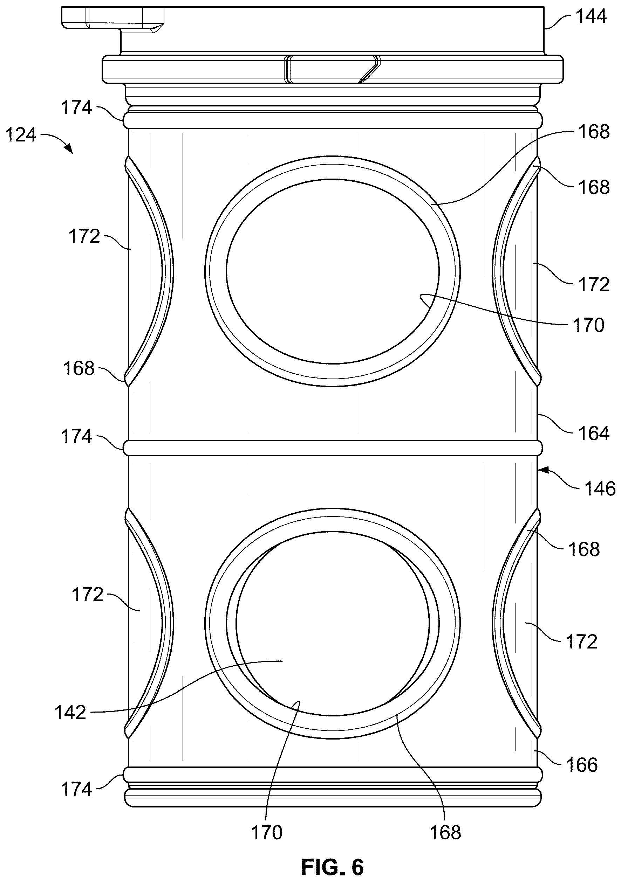

Figure 6 is a side view of a subassembly of the perspective view of the lightweight, multifunctional valve assembly of Figure 1, the subassembly including an inner sleeve, an outer sleeve and a tubular gasket.

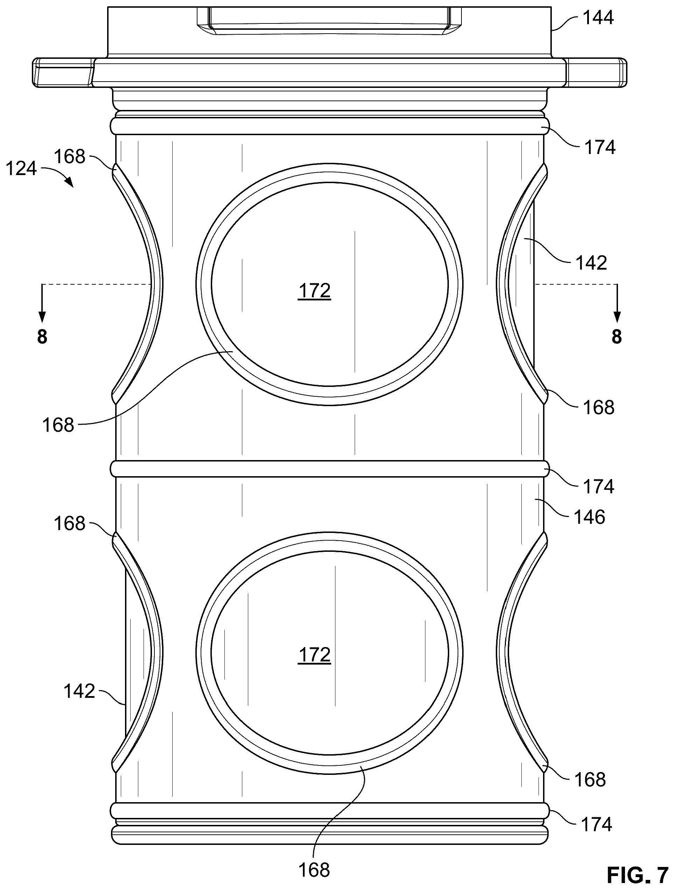

Figure 7 is another side view of the subassembly of Figure 6, the subassembly shown rotated 90 degrees about an axially extending centerline.

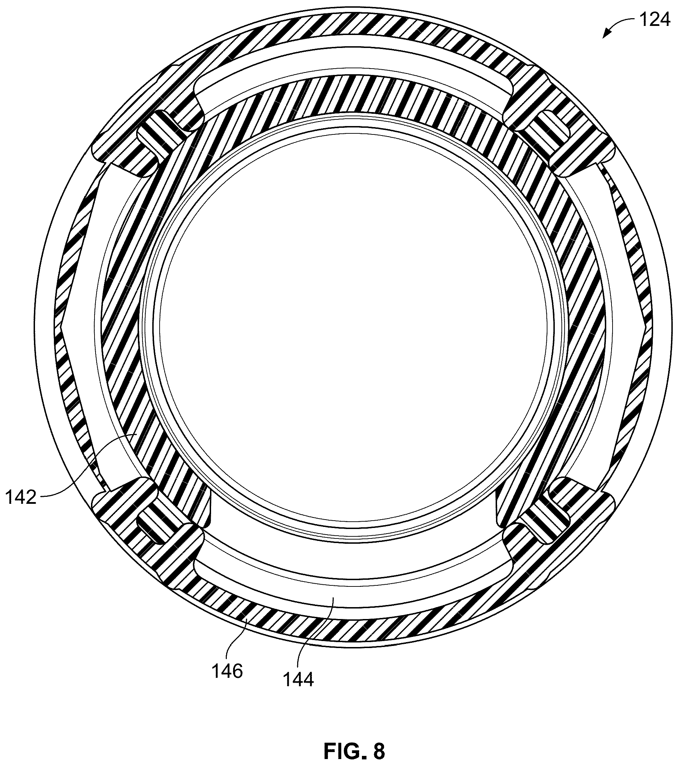

Figure 8 is a cross-sectional view taken along the line 8-8 of Figure 7.

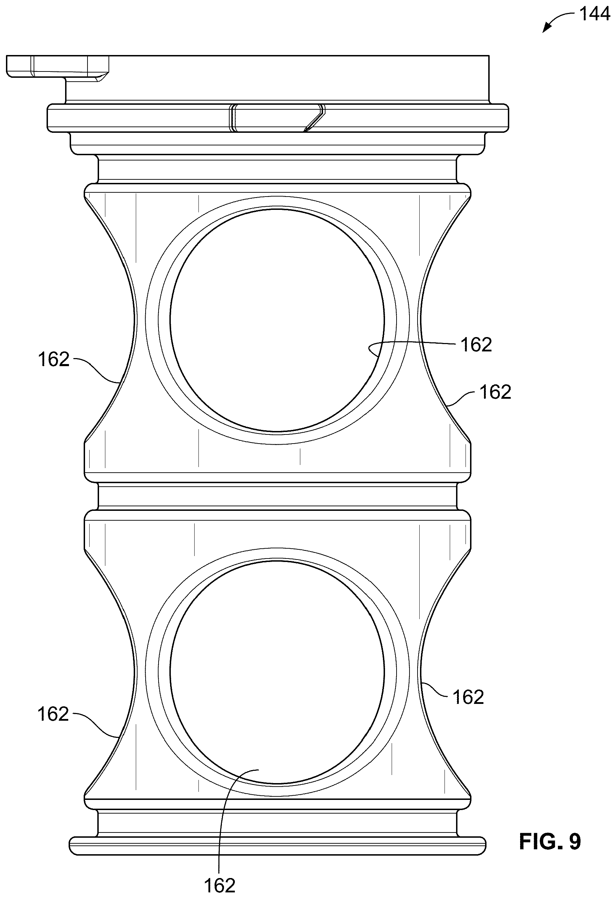

Figure 9 is a side view of the outer sleeve of the subassembly of Figure 6.

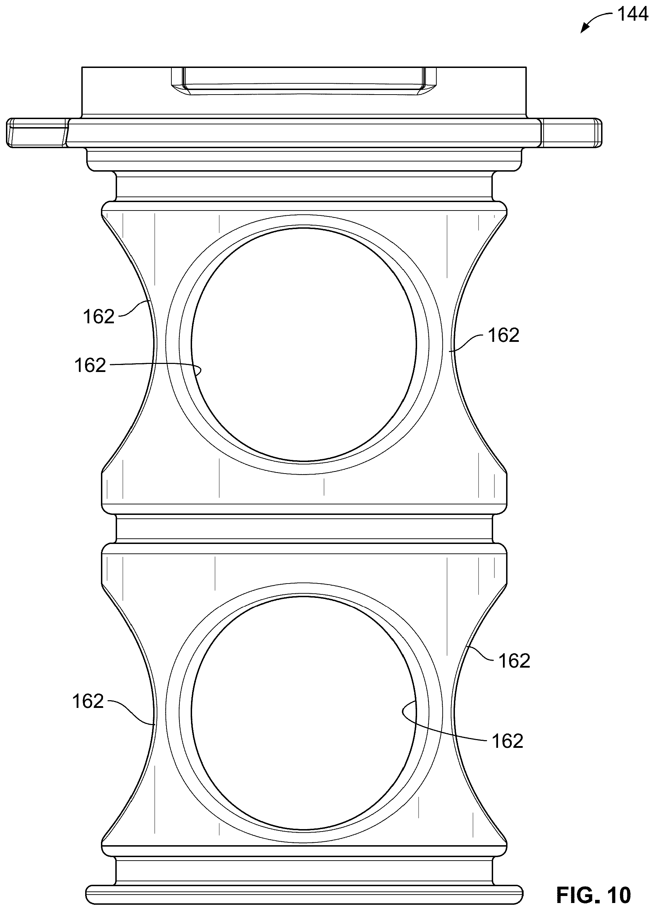

Figure 10 is another side view of the outer sleeve Figure 9, the outer sleeve shown rotated 90 degrees about an axially extending centerline.

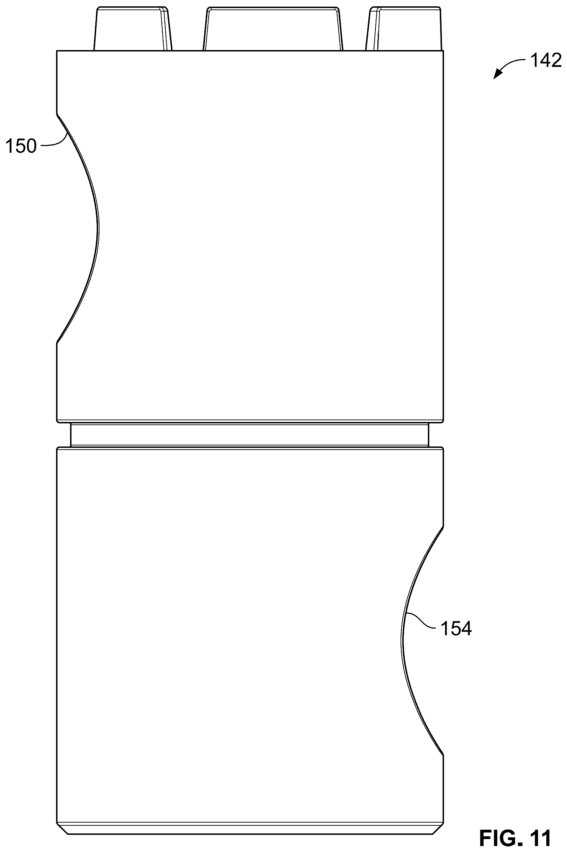

Figure 11 is a side view of the inner sleeve of the subassembly of Figure 6.

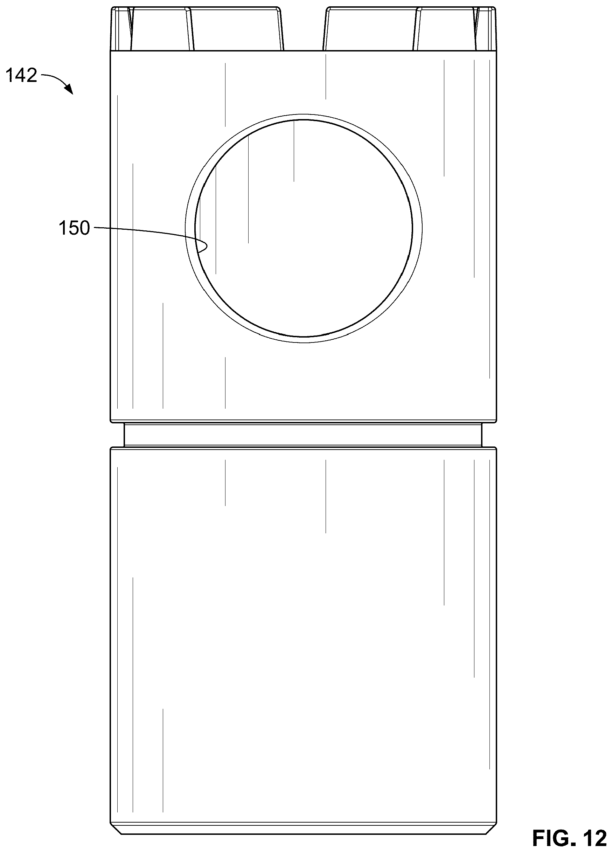

Figure 12 is another side view of the inner sleeve Figure 11, the inner shown rotated 90 degrees about an axially extending centerline.
Figure 13 is a high-level block diagram of an exemplary system incorporating the lightweight, multifunctional valve assembly of the present teachings.

### DETAILED DESCRIPTION

The following description is merely exemplary in nature and is not intended to limit the present disclosure, application, or uses. It should be understood that throughout the drawings, corresponding reference numerals indicate like or corresponding parts and features.

Referring generally to the drawings, a lightweight, multifunctional valve assembly in accordance with the present teachings is illustrated and generally identified at reference character 100. As will be further understood below, the valve assembly 100 includes a first portion 100A with a first 3-way valve functionality for selectively controlling flow of a first fluid and a second portion 100B with a second, 3-way valve functionality for selectively controlling flow of a second fluid. The present teachings may be readily adapted for various uses where it is desired to selectively control the flow of a first fluid and second fluid. The first and second fluids may be the same type of fluid or distinct types of fluids.

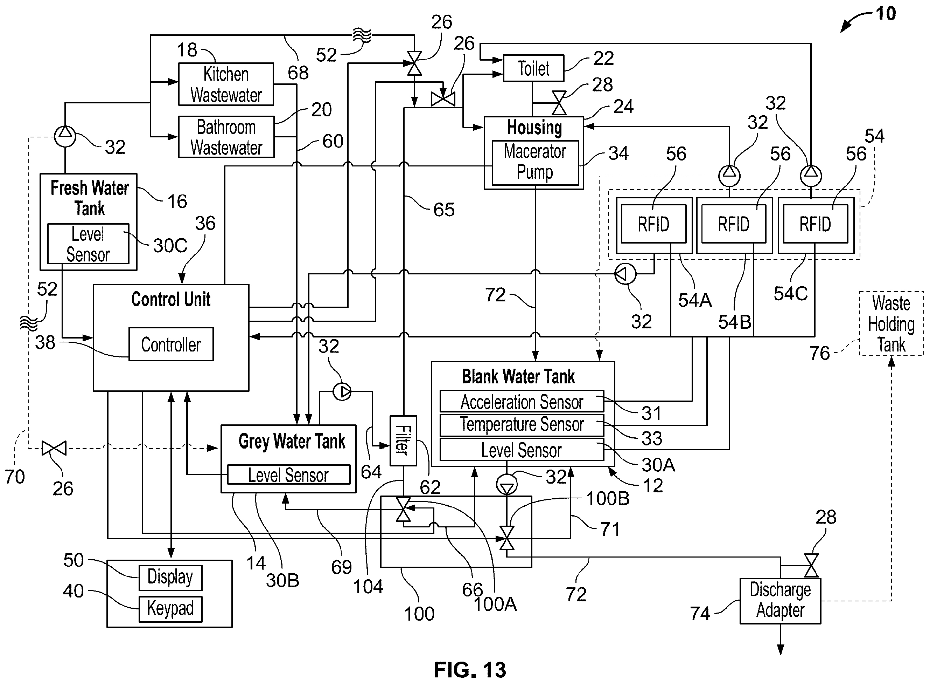

In one particular application, the valve assembly 100 may be incorporated into a wastewater management system 10 for a recreational vehicle ("RV"). It will be understood that this particular application shown in the drawings and described herein is merely an exemplary application of the present teachings. Before addressing the valve assembly 100 of the present teachings in greater detail, an understanding of such an exemplary use and the general functioning of the valve assembly 100 is warranted. Reference in this regard will be made particularly to the high-level block diagram of Figure 13.

The wastewater management system 10 includes a first holding structure defined by a black water holding tank 12, a second holding structure defined by a grey water holding tank 14, and a third holding structure defined by a fresh water holding tank 16. In general, the grey water tank 14 may hold grey water in the form of kitchen wastewater 18 from a kitchen sink, for example, and bathroom wastewater 20 from a bathroom sink and/or shower, for example. The grey water in the grey water holding tank 14 may be used for flushing of a toilet 22 for purposes of conserving water in the fresh water tank 16, and reduction of grey water in the grey water tank. The black water tank 12, in general, receives black water from a positive pressure or macerator pump 34. The macerator pump 34 is located in a macerator housing 24 associated with the toilet 22.

In addition to the lightweight, multifunctional valve assembly 100, the system 10 is illustrated to include various other valves for controlling flow between the various components. These other valves may be electronically controlled valves 26 or manually controlled valves 28. The valves 26 and 28 may be gate valves or ball valves, for example.

The system 10 includes level sensors 30A, 30B and 30C for sensing the level within the black water tank 12, the grey water tank 14 and the fresh water tank 16, respectively. The level sensors 30A, 30B and 30C may be float assemblies, for example, configured to transmit electronic signals that indicate a fluid level within the corresponding tank 12, 14, and 16.

The system 10 is shown to further include various pumps 32 for pumping fluid (e.g., fresh water, grey water, and black water and additives) through the system 10. The pumps 32 may be automatically controlled by electronic signals from the controller 38. Alternatively, the pumps 32 may be controlled by user input. The pumps 32 for the grey and black water tanks 14 and 12 may be centrifugal pumps and the pumps 32 for the additives may be piston pumps.

A control sub-system in the form of a control unit 38 and a display unit may be incorporated for controlling the management of wastewater within the system 10 and for emptying of the wastewater tanks 12, among other functions. The control unit 36 may be located anywhere in the vehicle. The control unit 38 may include a controller 38 in communication with the various pumps 32, the macerator pump 34, each of the valves, and each of the level sensors 30A, 30B and 30C.

A display unit 50 may incorporate a user operated keypad 40 or other buttons in communication with the controller 38 for initiating programmed routines of the system 10 and/or for opening/closing selected ones of the valves or pumps. The macerator pump 34 may be controlled at the toilet 22, for example. The grey water pump 32 may be controlled at both the toilet 22 (for flushing) and at a display 50 of the display unit 36 ( for instance, for pumping grey water to the black water tank 12, for mixing grey water or as part of an automated cleaning cycle). The controller 38 may be in communication with a display 42. The display may be an LCD touchscreen display 42, for example. The display 42 may have soft touch keys or controls to enable user selection various functions. Such soft touch keys or controls may be in addition to or in lieu of the keypad 40.

As shown in dashed lines in Figure 13, the fresh water tank 16 may optionally be in fluid communication with the grey water tank 14. This fluid communication may be through a valve 26. With such an optional communication between the fresh water tank 16 and the grey water tank 14, fluid communication between the fresh water tank 16 and the toilet 22 would not be required. Explaining further, such optional fluid communication may deliver fresh water to the grey water tank 14 for toilet flushing in the event the grey water tank 14 is empty or below a predetermined level and the system 10 does not provide for direct communication between the fresh water tank 14 and the toilet 22. Additionally, this communication between the fresh water tank 16 and the grey water tank 14 may be used for complete flushing/rinsing of the system 10.

The system 10 may additionally include an additive sub-system 54. The additive sub-system 54 may include additive dispensers 54A, 54B, and 54C. Each of the additive dispensers 54A, 54B, and 54C may be refillable with specific additives. In one embodiment, the additive dispensers 54A, 54B, and 54C may receive replaceable cartridges containing the specific additives. Each additive cartridge 54A, 54B, and 54C may be associated with an RFID label 56 that communicates with the controller to keep track of the pumped volume of additives from the dispenser. In this manner, the controller 38 can communicate the remaining level of additives to the user on the display. The RFID label 56 may also include, store and communicate other information such as, but not limited to, cartridge lifetime, cartridge type for keying in the wrong receptacle, cartridge producer, relevant usage data, etc.

The additive dispenser 54A may be in fluid communication with the grey water tank 14 through a pump 32 for delivering a grey water additive to the grey water tank 14. Dosing of the grey water additive to the grey water tank 14 may be controlled automatically by the controller 38. For example, the controller 38 may control dosing of the grey water additive to the grey water tank 14 in response to detection of a predetermined volume level of grey water in the grey water tank 14 by the level sensor 30B.

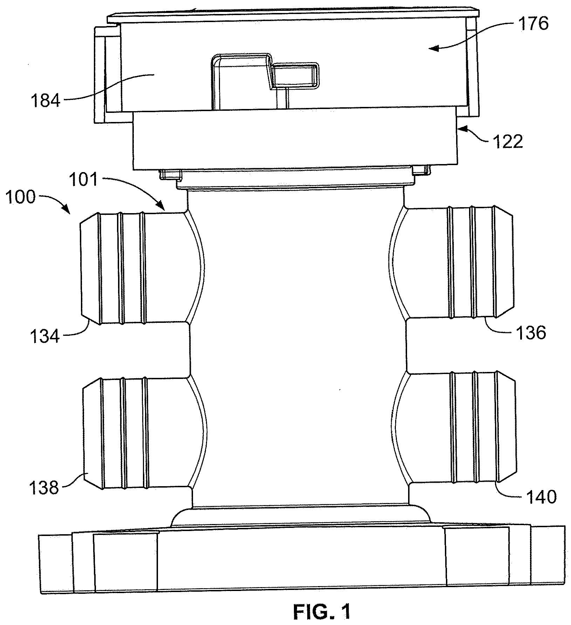

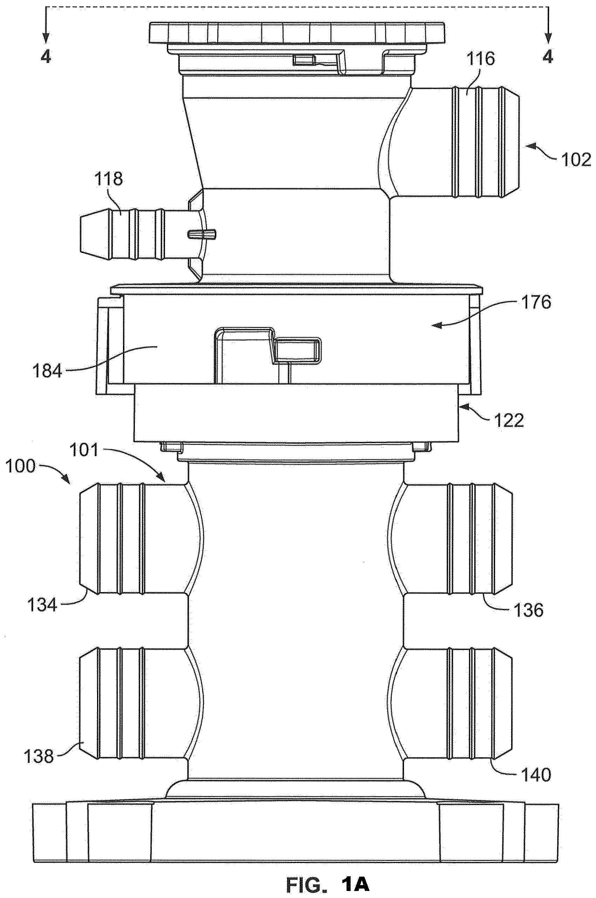

The additive dispenser 54B may be in fluid communication with the housing 24 associated with the toilet 22 through a pump 32 for delivering a black water additive. In this manner, black water additive may be delivered to the macerator housing 34A in response to a flush of the toilet 22. Alternatively, the black water additive may be delivered directly to the black water tank 12 (as shown in Figure 1 in dashed lines). The amount of additive per flush may be fixed and be sufficient to control the generation of malodor by the contents of the black water tank 12. Alternatively, the amount of black water additive per flush may be adjusted by the control 38 based on various factors, including but not limited to a time that waste is held in the black water tank 12, a temperature of the black water tank 12, a volume of black water in the black water tank.

The additive dispenser 54C may be in fluid communication with the flush conduit 65 through a pump 32 for delivering a flush water additive to the toilet bowl which is activated by a flush signal. In certain applications, each of the additive dispensers 54A, 54B, and 54C may also be associated with a sensor to sense the age of the corresponding additive and communicate a corresponding signal to the controller 38 when replacement is needed due to additive expiration.

When an RV equipped with the system 10 begins a trip, the fresh water tank 16 may be substantially or completely full. The black water tank 12 and the grey water tank 14 may be substantially or completely empty. The system 10 may monitor the levels within the tanks 12, 14 and 16 with the sensors 30A, 30B and 30C, respectively. At least the level of the black water tank 12 may be additionally monitored with an acceleration sensor 31 to more accurately assess tank capacity. The sensed levels of the tanks 12, 14, and 16 may be communicated to the controller 38 and in turn displayed for the user on the display 42, or the remote display.

Kitchen wastewater 18 from a kitchen sink, for example, and bathroom wastewater 20 from a bathroom sink and/or shower, for example, may drain to the grey water tank 14 under the force of gravity through a conduit 60. The kitchen wastewater 18 and bathroom wastewater 20 may be collected and stored in the grey water tank 14. The grey water in the grey water tank 14 may be used for flushing of the toilet 22 in response to a user request for flushing. This grey flush water is delivered to a filter 62 through a conduit 64. The filter 62 filters solids from the grey water to create a visually acceptable toilet flush water for the user. Filtered grey flush water is delivered to the toilet 22 for flushing through a conduit 65. The flush water additive discussed below may be introduced at this location. The conduit 65 is associated with a valve 26. Explaining further, the controller 38 may operate to open the electronically actuated valve 26 associated with the conduit 65 and pump grey water to the toilet 22.

The solids collected by the filter 62 may be periodically transported to the black water tank 12 through a conduit 66. In this regard, the controller 38 periodically functions to close the valve 26 associated with the conduit 65, open the portion of the valve assembly 100 associated with the conduit 66 to communicate the filter 62 with the black water tank 12, and pump grey water from the grey water tank 14 through conduit 64 and into the filter 62. These actions clean the inside of the filter 62 and transport the filtered solids through conduit 66 from the filter 62 to the black water tank 12.

The grey water in the grey water tank 14 is treated with automatically dosed additives. The filter 62 also enables a grey water mixing cycle that more evenly distributes grey water additives to treat the grey water and at the same time flushes the filter medium of the filter 62 clean. In this regard, a further conduit 69 extends from the filter 62 to the grey water tank 14. As shown in the embodiment illustrated, the further conduit 69 may be associated with the first portion 100A of the valve assembly 100. Explaining further, the first portion 100A of the valve assembly 100 may be controlled to completely close flow to both conduit 66 and conduit 69, may be opened to flow only to conduit 66 or may be open to flow only to conduit 69.

A hose or conduit 72 may extend between the black water tank 12 and the discharge adapter 74. The conduit 72 may be associated with the second portion 100B of the valve assembly 100 and a pump 32. The second portion 100B of the valve assembly 100 may be connected back to the black water tank 12 through black water mix conduit 71. When the valve assembly 100 is positioned in a mixing mode to allow flow back to the black water tank, the black water gets mixed when the black water pump 32 runs. Mixing of the black water is preferred to avoid sediments of black water in the tank and also to distribute incoming additives from the toilet macerator chamber with the total black water volume in the tank. The second portion 100B of the valve assembly 100 can also be operate to allow flow of black water to the discharge adapter 74.

In the event that the grey water tank 14 does not have sufficient grey water to complete a requested flush cycle of the toilet, the toilet 22 may be flushed with fresh water. Flushing of the toilet 22 with fresh water may be accomplished in two different manners depending on the particular configuration of the system 10. In a first manner, upon sensing of a low level of grey water within the grey water tank 14, the controller 38 opens an electronically actuated valve 26 associated with a conduit 68 between the fresh water tank 16 and the toilet 22. Fresh water is pumped from the fresh water tank 16 to the toilet 22. In a second manner, the controller 38 may open an electronically actuated valve 26 associated with an option conduit 70 between the fresh water tank 16 and the grey water tank 14. Fresh water is pumped from the fresh water tank 16 to the grey water tank 14. The controller then delivers the fresh water residing in the grey water tank 14 to the toilet 22 in the manner discussed above.

The black water tank 12 and the grey water tank 14 may be periodically emptied in response to a user command entered through a control on the discharge adapter 74 or by a remote device. Such emptying of the black water tank 12 may be desired when the black water tank 12 has reached capacity or when an RV trip has been completed, for example. In response to user input, the controller 38 may operate to open the valve 26 associated with the conduit 72 providing fluid communication between the black water tank 12 and a drain 96 or discharge adapter 74. The conduit 72 may also be associated with a first manually actuated valve 28 proximate the discharge adapter 74. Upon opening the valve 28, the controller 38 may pump black water from the black water tank 12 to the discharge adapter 74. After the black water tank 12 is emptied, the grey water pump will pump the grey water into the black water tank 12 to rinse the walls of the black water tank 12 and empty the grey water tank 14. The grey water will then travel from the black water tank 12 to the discharge adapter 74 to clean out the discharge adapter 74 and associated hoses.

Optionally, the discharge adapter 74 may be connected to a further waste holding tank 76. The further waste holding tank 76 may be permanently or removably carried by the RV, may provide further capacity for black water storage, and may to be able to dump waste in a traditional way (i.e., transport of the waste holding tank 76 without moving the vehicle). One suitable type of portable waste holding tank 76 is sold by the assignee of this application under the trademark Cassette^{®}.

The lightweight, multifunctional valve assembly 100 of the present teachings will now be further described. The valve assembly 100 includes a valve housing 101. The valve housing 101 may be unitarily constructed of plastic to thereby reduce the weight of the valve assembly 100. In one application, the valve housing 101 may be injection molded of plastic.

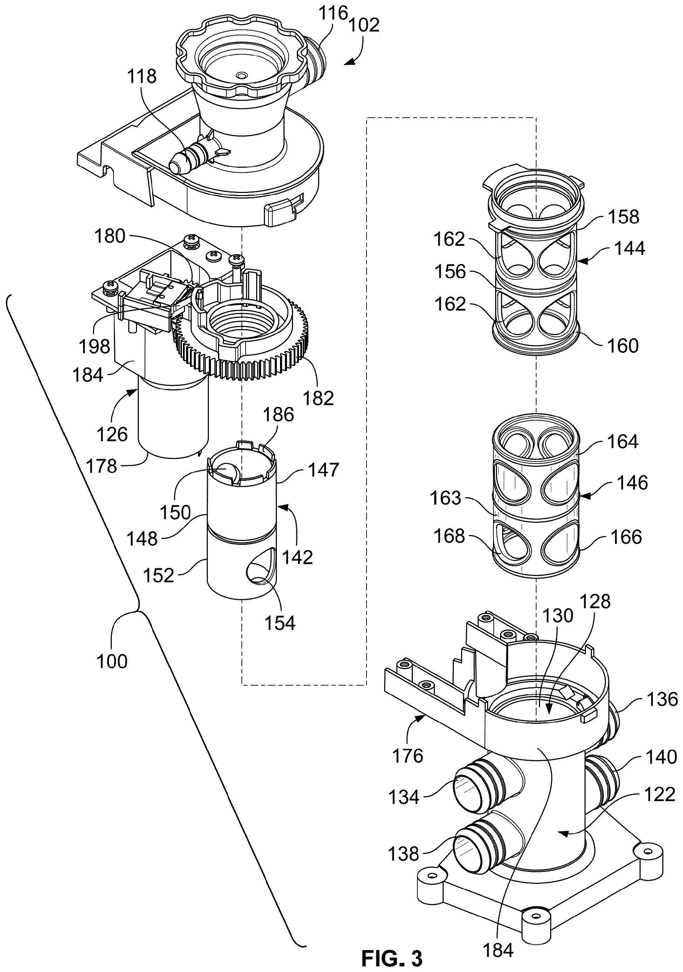

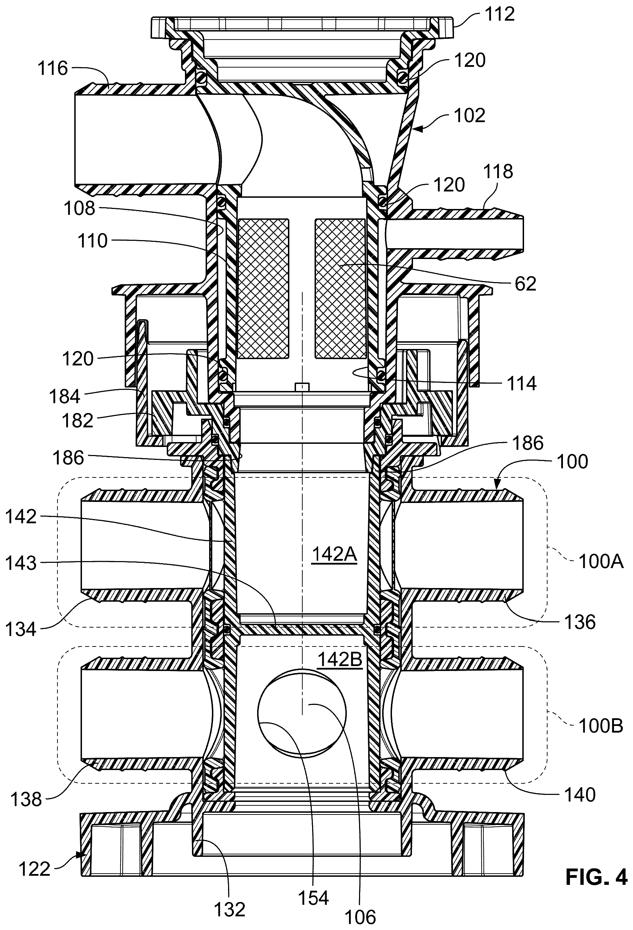

As generally shown in the figures, the valve assembly 100 is constructed to be located at a distance from the filter 62 and connected by a hose or conduit 104 (see Figure 13). In some applications, however, it may be desired to incorporate the valve assembly 100 into a larger assembly including the filter 62. In this regard, Figures 1A, 3 and 4 illustrated an alternative embodiment in which the valve assembly 100 is shown as part of a larger assembly including a filter housing 102 for the filter 62.

Insofar as the present teachings are concerned, the filter housing 102 will be understood to be similar in construction and operation where the filter housing 102 is located remote from the valve assembly 100 and where the valve assembly 100 and filter housing 102 are part of a common, larger assembly. As shown in the alternative embodiment of Figures 1A, 3 and 4, the valve assembly 100 and filter housing 102 may be elongated along a common central axis 106.

The filter housing 102 may define a cavity 108 open at an upper end of the housing 102. The cavity 108 may receive a filter insert 110. The filter insert 110 is generally cylindrical in shape, including a closed end 112 and an open end 114. A central portion of the filter insert 110 between the closed end 112 and the open end 114 includes a plurality of windows. The windows are covered by the media of the filter 62. The interior of the filter insert 110 is in fluid communication with the conduit 64 though a filter housing input port 116. In this manner, the conduit 64 is in fluid communication with a dirty side of the filter 62. The filter housing 102 further includes a filter housing output port 118. The output port 118 provides fluid communication between the conduit 65 leading to the toilet 22 and the clean side of the filter 62. The filter insert 110 carries one or more sealing members or O-rings 120 that define fluid tight interfaces between the filter insert 110 and the housing 102 to prevent dirt from flowing from the "dirty" side of the filter to the "clean water" side of the filter.

The valve assembly 100 is illustrated to generally include a valve housing 122, a valve subassembly 124, and a drive arrangement 126. The valve housing 122 defines a cylindrical chamber 128. At one end 130, the chamber 128 is in fluid communication with the filter 62. At a second end 132, the chamber 128 is in fluid communication with the black water tank 12 through the conduit 71. The housing 122 includes a first output port 134 for connecting to the conduit 66 leading to the black water tank 12, a second output port 136 for connecting to the conduit 69 leading to the grey water tank 14, a third output port 138 for connecting to the conduit 71 leading to the black water tank 12, and a fourth output port 140 for connecting to the conduit 72 leading to the discharge adapter 74.

The valve subassembly 124 is received within the chamber 128 and rotatable about the axis 106 to control various modes of operation of the valve assembly 100. The valve subassembly 124 generally includes a first sleeve or inner sleeve 142, a second sleeve or outer sleeve 144 and a tubular gasket 146. The outer sleeve 144 is rotationally fixed relative to the housing 122. The tubular gasket 146 is carried on the outside of the outer sleeve 144 and similarly is rotationally fixed relative to the housing 122. The inner sleeve 142 rotates within the outer sleeve 144. The tubular gasket 146 provides a seal between the housing 122 and the outer sleeve 144 and also seals with the inner sleeve 142.

The inner sleeve 142 includes a cylindrical sidewall 147 open at axial opposite ends with a first or upper sleeve portion 148 with a first sidewall opening 150 and a second or lower sleeve portion 152 with a second sidewall opening 154. The first portion 148 is open to receive the first fluid or grey water into a first inner portion 142A of the first sleeve 142. The second portion 152 is open to receive the second fluid or black water into a second inner portion 142B of the first sleeve 142. The first and second inner portions 142A, 142B of the first sleeve 142 are separated by a radially extending wall 143. The first and second sidewall openings 150 and 154 are radially offset 180 degrees from each other and correspond with valve open positions. The inner sleeve 142 may be injection molded or otherwise suitably formed of plastic.

The outer sleeve 144 includes a cylindrical sidewall 156 open at axial opposite ends with a first or upper portion 158 and a second or lower portion 160. The first and second portions 158 and 160 both include four openings 162 equally spaced about the circumference of the cylindrical sidewall 156.

The tubular gasket 146 includes a cylindrical sidewall 163 with a first or upper portion 164 and a second or lower portion 166. The first and second portions 164 and 166 are both integrally formed to include four O-rings 168 in a convex portion of the sidewall 163. Two of the O-rings 168 on both the first and second portions 164 and 166 that are radially opposite one another surround open holes 170 in the sidewall 163. The remaining O-rings 168 surround solid portions 172 of the gasket 146. The tubular gasket 146 also integrally defines circumferentially extending O-rings 174 at the first end, second end and an axial center of the gasket 146. The O-rings 174 cooperate to seal against the housing 122.

The inner sleeve 142 is driven for rotation within the housing 122 and about the axis 106 by the drive arrangement 126. The drive arrangement 126 generally includes a housing 176, a drive motor 178, a drive gear 180 and a driven gear 182. The drive motor 178 is a common motor associated with the first and second portions 100A and 100B of the valve assembly 124 and operative to drive both of the first and second portions to operate in first, second and third operational modes.

The housing 176 includes a first housing portion 184 captured between the filter housing 102 and the valve housing 122. The first housing portion 184 defines a tray that rotatably receives the driven gear 182. The driven gear 182 includes a first keyed portion that extends into a central opening of the tray of the first housing portion 184 and engages a second, cooperating keyed portion 186 of the inner sleeve 142. In this manner, the inner sleeve 142 is coupled to the driven gear 182 for rotation about the axis 106.

A second housing portion 184 of the housing 176 carries the drive motor 126. A shaft 186 driven by the drive motor 126 carries the drive gear 180. Teeth of the drive gear 180 meshingly engage teeth of the driven gear 182. When the controller 38 operates the drive motor 126, the inner sleeve 142 is rotated about the axis 116 between various operational modes. The amount of rotation the driven gear 182 and resultantly the inner sleeve 142 may be controlled by a limit switch 188.

The first portion 100A of the valve assembly 100 will now be understood to control the flow a first fluid within the system 10, namely grey water from the filter 62. The first portion 100A has three operating conditions. In a first operation condition of the first portion 100A, the inner sleeve 142 is rotated about the axis 106 such that the outlet port 134 leading to the conduit 66 and the outlet port 136 leading to the conduit 69 are both closed to the flow of grey water from the filter 62. Under this first operating condition, grey water from the filter 62 is available for flushing of the toilet 22. In a second operation condition of the first portion 100A, the inner sleeve 142 is rotated about the axis 106 such that the outlet port 134 leading to the conduit 66 is closed to the flow of grey water from the filter 62 and the outlet port 136 leading to the conduit 69 is open to the flow of grey water from the filter 62. Under this second operating condition, grey water from the filter 62 is directed back to the grey water tank 14 for mixing within the grey water tank. In a third operation condition of the first portion 100A, the inner sleeve 142 is rotated about the axis 106 such that the outlet port 134 leading to the conduit 66 is open to the flow of grey water from the filter 62 and the outlet port 136 leading to the conduit 69 is closed to the flow of grey water from the filter 62. Under this third operating condition, grey water from the filter 62 is discharged to the black water tank 12.

The second portion of the valve assembly 100B controls the flow of a second fluid within the system 10, namely black water from the black water tank 12. The second portion 100B similarly has three operating conditions. In a first operation condition of the first portion 100B, the inner sleeve 142 is rotated about the axis 106 such that the outlet port 138 leading to the conduit 71 and the outlet port 140 leading to the conduit 72 are both closed to the flow of black water from the black water tank 12. Under this first operating condition, there is no flow of black water within the system 10. In a second operation condition of the first portion 100B, the inner sleeve 142 is rotated about the axis 106 such that the outlet port 138 leading to the conduit 71 is open to the flow of black water and the outlet port 140 leading to the conduit 72 is closed to the flow of black water. Under this second operating condition, black water from the black water tank 12 is returned to the black water tank 12 for mixing within the black water tank 12. In a third operation condition of the first portion 100B, the inner sleeve 142 is rotated about the axis 106 such that the outlet port 138 leading to the conduit 71 is closed to the flow of black water and the outlet port 140 leading to the conduit 72 is open to the flow of black water. Under this third operating condition, black water from the black water tank 12 is discharged to the discharge adapter 74.

Insofar as rotation of the inner sleeve 142 controls the operating conditions of both the first portion 100A and second portion 100B of the valve assembly 100, it will be understood that the valve assembly 100 can be controlled to operate in three distinct operating modes. In a first operating mode of the valve assembly 100, the first and second portions 100A and 100B are both in their first operating condition. In this first mode, or static mode, there is no flow of grey water from the filter 62 through the valve assembly 100. In a second operating mode of the valve assembly 100, the first and second portions 100A and 100B are both in their second operating conditions. In this second operating mode, or mix mode, grey water from the filter 62 flows back to the grey water tank 14 to mix grey water within the grey water tank 14 and black water from the black water tank 12 flows back to the black water tank 12 for mixing. In a third operating mode of the valve assembly 100, the first and second portions 100A and 100B are both in their third operating conditions. In this third operating mode, or discharge mode, grey water from the filter 62 flows to the black water tank 12 to flush the filter of captured solids and black water from the black water tank 12 is discharged to the discharge adapter 74.

Accordingly, it will now be appreciated that the present teachings to provide a multifunctional valve assembly with reduced weight. The present teachings additionally provide a multifunctional valve assembly including a first portion for controlling at least two fluid flows and a second portion for controlling at least two fluid flows, the first and second portions operated by a single motor. Further, the present teachings provide a multifunctional valve assembly associated with reduced operation times for the switching of valve positions.

While specific details have been described, those skilled in the art will recognize that various modifications or variations may be made without departing from the scope of the present invention, as defined by the appended claims.

The one or more examples provided herein simply illustrate the various embodiments and are not intended to limit the present disclosure. While the valve assembly 100 has been described particularly for a wastewater management system, it will be appreciated that the present teachings may be readily adapted for other applications.

## Claims

1. A multifunctional valve assembly (100) comprising:
a first portion (100A); and
a second portion (100B), wherein
the first portion (100A) includes a first 3-way valve functionality for selectively controlling flow of a first fluid;
the second portion (100B) includes a second 3-way valve functionality for selectively controlling flow of a second fluid; wherein
the multifunctional valve assembly (100) further includes a common motor (178) associated with the first and second portions (100A) and (100B) and operative to drive both of the first and second portions (100A) and (100B) to operate in first, second and third operational modes, and wherein
the multifunctional valve assembly (100) further includes a valve housing (101),
a first sleeve (142) rotatably disposed in the valve housing (101), the first sleeve (142) including a first sleeve portion (148) and a second sleeve portion (152) that rotate together about an axis, the first sleeve portion (148) adapted to control flow of the first fluid through the valve housing (101) and the second sleeve portion (152) adapted to control flow of the second fluid through the valve housing (101), wherein the first sleeve (142) is an inner sleeve, and wherein
the valve assembly (100) further comprises an outer sleeve (144) circumferentially surrounding the first sleeve (142), wherein the outer sleeve (144) is rotationally fixed relative to the valve housing (101) and the inner sleeve (142) is rotatable relative to the outer sleeve (144) **characterized in that** the valve assembly (100) further comprises a one-piece tubular gasket (146) carried on an outside of the outer sleeve (144) and thereby rotationally fixed relative to the valve housing (101), the tubular gasket (146) sealing the valve housing (101) relative to each of the outer sleeve (144) and the first sleeve portion (148) and the second sleeve portion (152) of the first sleeve (142).

2. The multifunctional valve assembly (100) according to claim 1, **characterized by** the valve housing (101) being unitarily constructed of plastic.

3. The multifunctional valve assembly (100) according to claim 2, in combination with a filter housing (102) and a filter (62) in the filter housing (102).

4. The multifunctional valve assembly (100) according to claim 3, **characterized in that** the filter housing (102) is in fluid communication with the multifunctional valve assembly (100) through a conduit (104).

5. The multifunctional valve assembly (100) according to claim 3, **characterized in that** the filter housing (102) is coupled to the valve housing (101).

6. The multifunctional valve assembly (100) according to claim 1, **characterized in that** the first sleeve (142) includes a cylindrical sidewall (147), and wherein the first sleeve portion (148) has a first open end to receive the first fluid into a first inner portion (142A) of the first sleeve (142) and the second sleeve portion (152) includes a second open end to receive the second fluid into a second inner portion (142B) of the first sleeve (142).

7. The multifunctional valve assembly (100) according to claim 6, **characterized in that** the first sleeve (142) further includes a radially extending wall (143) separating the first inner portion (142A) from the second inner portion (142B).

8. The multifunctional valve assembly (100) according to claim 6, **characterized in that** the valve housing (101) includes first and second output ports (134,136) in selective fluid communication with the first inner portion (142A) of the first sleeve (142) and third and fourth output ports (138,140) in fluid communication with the second inner portion (142B) of the first sleeve (142).

9. The multifunctional valve assembly (100) according to claim 6, **characterized in that** the cylindrical sidewall (147) of the first sleeve portion (148) includes a first sidewall opening (150) and the cylindrical sidewall (147) of the second sleeve portion (152) includes a second sidewall opening (154), the first and second sidewall openings (152,154) being radially offset from each other and corresponding with valve open positions.

10. The multifunctional valve assembly (100) according to claim 1, **characterized in that** the valve housing (101) further comprises a drive arrangement (126) including a common drive motor (128) for rotating the first sleeve (142) about an axis of the first sleeve (142), the drive arrangement (126) preferably including a driven gear (182), the driven gear (182) including a first keyed portion that engages a second, cooperating keyed portion of the inner sleeve (142).

11. The multifunctional valve assembly (100) of claim 8, **characterized in that**:
the first sidewall opening (150) radially aligns with neither of the first and second output ports (134,136) when the first portion (100A) of the valve assembly (100) operates in the first operational mode,
the first sidewall opening (150) radially aligns the first output port (134) when the first portion (100A) of the valve assembly (100) operates in the second operational mode,
the first sidewall opening (150) radially aligns with the second output port (136) when the first portion (100A) of the valve assembly (100) operates in the third operational mode,
the second sidewall opening (154) radially aligns with neither of the third and fourth output ports (138,140) when the second portion (100B) of the valve assembly (100) operates in the first operational mode,
the second sidewall opening (154) radially aligns the third output port (138) when the second portion (100B) of the valve assembly (100) operates in the second operational mode, and
the second sidewall opening (154) radially aligns with the fourth output port (140) when the second portion (100B) of the valve assembly (100) operates in the third operational mode.

12. A wastewater management system (10) of a vehicle, comprising the multifunctional valve assembly (100) according to claim 8, wherein the first fluid is grey water and the second fluid is black water.

13. The wastewater management system (10) according to claim 12, **characterized in that** the valve assembly (100) is adapted such that:
in its first operational mode, the first portion (100A) of the valve assembly (100) functions to close both the first and second output ports (134, 136) to the flow of grey water to make grey water available for flushing of a toilet (22);
in its second operational mode, the first portion (100A) of the valve assembly (100) functions to close the first output port (134) and open the second output port (136) for directing grey water from a filter (62) back to a grey water tank (14) of the wastewater management system (10);
in its third operational mode, the first portion (100A) of the valve assembly (100) functions to open the first output port (134) and close the second output port (136) such that grey water from the filter (62) is discharged to a black water tank (12) of the wastewater management system (10);
in its first operational mode, the second portion (100B) of the valve assembly (100) functions to close both the third and fourth output ports (138, 140) to the flow of black water within the wastewater management system (10);
in its second operational mode, the second portion (100B) of the valve assembly (100) functions to open the third output port (138) and close the fourth output port (140) for returning black water from the black water tank (12) back to the black water tank (12); and
in its third operational mode, the second portion (100B) of the valve assembly (100) functions to close the third output port (138) and open the fourth output port (140) for discharging black water from the black water tank (12) to a discharge adapter (74).

14. A method of operating the multifunctional valve assembly (100) according to one of the preceding claims 1 to 11, the method **characterized by**:
rotating the first sleeve (142) about the axis of the first sleeve (142) with the common motor (128) to concurrently drive the first and second portions (100A) and (100B) of the valve assembly (100) to operate in the respective first, second and third operational modes.

## Patentansprüche

1. Multifunktions-Ventilbaugruppe (100), aufweisend:
einen ersten Abschnitt (100A); und
einen zweiten Abschnitt (100B), wobei
der erste Abschnitt (100A) eine erste 3-Wege-Ventil-Funktionalität zur selektiven Steuerung des Flusses einer ersten Flüssigkeit umfasst,
der zweite Abschnitt (100B) eine zweite 3-Wege-Ventil-Funktionalität zur selektiven Steuerung des Flusses einer zweiten Flüssigkeit umfasst; wobei
die Multifunktions-Ventilbaugruppe (100) ferner einen gemeinsamen Motor (178) umfasst, der mit dem ersten und dem zweiten Abschnitt (100A) und (100B) verbunden ist und sowohl den ersten als auch den zweiten Abschnitt (100A) und (100B) antreibt, um in einem ersten, zweiten und dritten Betriebsmodus zu arbeiten, und wobei
die Multifunktions-Ventilbaugruppe (100) ferner ein Ventilgehäuse (101) umfasst,
eine erste Hülse (142), die drehbar in dem Ventilgehäuse (101) angeordnet ist, wobei die erste Hülse (142) einen ersten Hülsenabschnitt (148) und einen zweiten Hülsenabschnitt (152) umfasst, die sich zusammen um eine Achse drehen, wobei der erste Hülsenabschnitt (148) eingerichtet ist, um den Fluss der ersten Flüssigkeit durch das Ventilgehäuse (101) zu steuern, und wobei der zweite Hülsenabschnitt (152) eingerichtet ist, um den Fluss der zweiten Flüssigkeit durch das Ventilgehäuse (101) zu steuern, wobei die erste Hülse (142) eine Innenhülse ist und wobei
die Ventilbaugruppe (100) ferner eine Außenhülse (144) aufweist, die die erste Hülse (142) in Umfangsrichtung umgreift, wobei die Außenhülse (144) relativ zum Ventilgehäuse (101) drehfest angeordnet ist und die Innenhülse (142) relativ zur Außenhülse (144) drehbar ist, **dadurch gekennzeichnet, dass** die Ventilanordnung (100) ferner eine einteilige rohrförmige Dichtung (146) aufweist, die an einer Außenseite der Außenhülse (144) getragen und dadurch relativ zum Ventilgehäuse (101) drehfest angeordnet ist, wobei die rohrförmige Dichtung (146) das Ventilgehäuse (101) gegenüber jeder der Außenhülse (144) und dem ersten Hülsenabschnitt (148) und dem zweiten Hülsenabschnitt (152) der ersten Hülse (142) abdichtet.

2. Multifunktions-Ventilbaugruppe (100) nach Anspruch 1, **gekennzeichnet durch** das Ventilgehäuse (101), das einstückig aus Kunststoff gefertigt ist.

3. Multifunktions-Ventilbaugruppe (100) nach Anspruch 2 in Kombination mit einem Filtergehäuse (102) und einem Filter (62) in dem Filtergehäuse (102).

4. Multifunktions-Ventilbaugruppe (100) gemäß Anspruch 3, **dadurch gekennzeichnet, dass** das Filtergehäuse (102) über eine Leitung (104) in Fluidverbindung mit der Multifunktions-Ventilbaugruppe (100) steht.

5. Multifunktions-Ventilbaugruppe (100) gemäß Anspruch 3, **dadurch gekennzeichnet, dass** das Filtergehäuse (102) mit dem Ventilgehäuse (101) gekoppelt ist.

6. Multifunktions-Ventilbaugruppe (100) nach Anspruch 1, **dadurch gekennzeichnet, dass** die erste Hülse (142) eine zylindrische Seitenwand (147) umfasst, und wobei der erste Hülsenabschnitt (148) ein erstes offenes Ende aufweist, um die erste Flüssigkeit in einem ersten Innenabschnitt (142A) der ersten Hülse (142) aufzunehmen, und der zweite Hülsenabschnitt (152) ein zweites offenes Ende aufweist, um die zweite Flüssigkeit in einem zweiten Innenabschnitt (142B) der ersten Hülse (142) aufzunehmen.

7. Multifunktions-Ventilbaugruppe (100) nach Anspruch 6, **dadurch gekennzeichnet, dass** die erste Hülse (142) ferner eine sich radial erstreckende Wand (143) umfasst, die den ersten Innenabschnitt (142A) von dem zweiten Innenabschnitt (142B) trennt.

8. Multifunktions-Ventilbaugruppe (100) nach Anspruch 6, **dadurch gekennzeichnet, dass** das Ventilgehäuse (101) eine erste und eine zweite Ausgangsöffnung (134, 136), die in selektiver Fluidverbindung mit dem ersten Innenabschnitt (142A) der ersten Hülse (142) stehen, und eine dritte und eine vierte Ausgangsöffnung (138, 140), die in Fluidverbindung mit dem zweiten Innenabschnitt (142B) der ersten Hülse (142) stehen, aufweist.

9. Multifunktions-Ventilbaugruppe (100) nach Anspruch 6, **dadurch gekennzeichnet, dass** die zylindrische Seitenwand (147) des ersten Hülsenabschnitts (148) eine erste Seitenwandöffnung (150) aufweist und die zylindrische Seitenwand (147) des zweiten Hülsenabschnitts (152) eine zweite Seitenwandöffnung (154) aufweist, wobei die erste und die zweite Seitenwandöffnung (152, 154) radial versetzt zueinander sind und Ventilöffnungspositionen entsprechen.

10. Multifunktions-Ventilbaugruppe (100) nach Anspruch 1, **dadurch gekennzeichnet, dass** das Ventilgehäuse (101) ferner eine Antriebsanordnung (126) aufweist, die einen gemeinsamen Antriebsmotor (128) zum Drehen der ersten Hülse (142) um eine Achse der ersten Hülse (142) umfasst, wobei die Antriebsanordnung (126) vorzugsweise ein Getriebe (182) umfasst, wobei das Getriebe (182) einen ersten verkeilten Abschnitt umfasst, der in einen zweiten, zusammenwirkenden verkeilten Abschnitt der inneren Hülse (142) eingreift.

11. Multifunktionsventilanordnung (100) nach Anspruch 8, **dadurch gekennzeichnet, dass**:
die erste Seitenwandöffnung (150) weder mit der ersten noch mit der zweiten Ausgangsöffnung (134, 136) radial fluchtet, wenn der erste Abschnitt (100A) der Ventilanordnung (100) im ersten Betriebsmodus arbeitet,
die erste Seitenwandöffnung (150) mit der ersten Ausgangsöffnung (134) radial fluchtet, wenn der erste Abschnitt (100A) der Ventilanordnung (100) im zweiten Betriebsmodus arbeitet,
die erste Seitenwandöffnung (150) mit der zweiten Ausgangsöffnung (136) radial fluchtet, wenn der erste Abschnitt (100A) der Ventilanordnung (100) im dritten Betriebsmodus arbeitet,
die zweite Seitenwandöffnung (154) weder mit der dritten noch mit der vierten Ausgangsöffnung (138, 140) radial fluchtet, wenn der zweite Abschnitt (100B) der Ventilanordnung (100) im ersten Betriebsmodus arbeitet,
die zweite Seitenwandöffnung (154) mit der dritten Ausgangsöffnung (138) radial fluchtet, wenn der zweite Abschnitt (100B) der Ventilbaugruppe (100) im zweiten Betriebsmodus arbeitet, und
die zweite Seitenwandöffnung (154) mit der vierten Ausgangsöffnung (140) radial fluchtet, wenn der zweite Abschnitt (100B) der Ventilanordnung (100) im dritten Betriebsmodus arbeitet.

12. Abwassermanagementsystem (10) eines Fahrzeugs, aufweisend die Multifunktions-Ventilbaugruppe (100) nach Anspruch 8, wobei die erste Flüssigkeit Grauwasser und die zweite Flüssigkeit Schwarzwasser ist.

13. Abwassermanagementsystem (10) nach Anspruch 12, **dadurch gekennzeichnet, dass** die Ventilbaugruppe (100) so eingerichtet ist, dass:
in ihrem ersten Betriebsmodus der erste Abschnitt (100A) der Ventilbaugruppe (100) dahingehend funktioniert, sowohl die erste als auch die zweite Ausgangsöffnung (134, 136) für den Grauwasserfluss zu schließen, um Grauwasser für das Spülen einer Toilette (22) verfügbar zu machen;
in ihrem zweiten Betriebsmodus der erste Abschnitt (100A) der Ventilbaugruppe (100) dahingehend funktioniert, die erste Ausgangsöffnung (134) zu schließen und die zweite Ausgangsöffnung (136) zu öffnen, um Grauwasser von einem Filter (62) zurück zu einem Grauwassertank (14) des Abwassermanagementsystems (10) zu leiten;
in ihrem dritten Betriebsmodus der erste Abschnitt (100A) der Ventilbaugruppe (100) dahingehend funktioniert, die erste Ausgangsöffnung (134) zu öffnen und die zweite Ausgangsöffnung (136) zu schließen, so dass Grauwasser aus dem Filter (62) in einen Schwarzwassertank (12) des Abwasserwirtschaftssystems (10) abgeleitet wird;
in ihrem ersten Betriebsmodus der zweite Abschnitt (100B) der Ventilbaugruppe (100) dahingehend funktioniert, sowohl die dritte als auch die vierte Ausgangsöffnung (138, 140) zu schließen, um den Fluss von Schwarzwasser innerhalb des Abwassermanagementsystems (10) zu verhindern;
in ihrem zweiten Betriebsmodus der zweite Abschnitt (100B) der Ventilbaugruppe (100) dahingehend funktioniert, die dritte Ausgangsöffnung (138) zu öffnen und die vierte Ausgangsöffnung (140) zu schließen, um Schwarzwasser aus dem Schwarzwassertank (12) zurück in den Schwarzwassertank (12) zurückzuführen; und
in ihrem dritten Betriebsmodus der zweite Abschnitt (100B) der Ventilanordnung (100) dahingehend funktioniert, die dritte Ausgangsöffnung (138) zu schließen und die vierte Ausgangsöffnung (140) zu öffnen, um Schwarzwasser aus dem Schwarzwassertank (12) in einen Auslaufadapter (74) abzulassen.

14. Verfahren zum Betreiben der Multifunktions-Ventilbaugruppe (100) nach einem der vorhergehenden Ansprüche 1 bis 11, wobei das Verfahren **gekennzeichnet ist durch**:
Drehen der ersten Hülse (142) um die Achse der ersten Hülse (142) mit dem gemeinsamen Motor (128), um gleichzeitig den ersten und den zweiten Abschnitt (100A) und (100B) der Ventilanordnung (100) anzutreiben, damit sie in dem jeweiligen ersten, zweiten und dritten Betriebsmodus arbeiten.

## Revendications

1. Ensemble vanne (100) multifonctionnel comprenant :
une première partie (100A) ; et
une deuxième partie (100B), dans lequel
la première partie (100A) inclut une première fonctionnalité de vanne à 3 voies pour la régulation sélective de l'écoulement d'un premier fluide ;
la deuxième partie (100B) inclut une deuxième fonctionnalité de vanne à 3 voies pour la régulation sélective de l'écoulement d'un deuxième fluide ; dans lequel
l'ensemble vanne (100) multifonctionnel inclut en outre un moteur commun (178) associé aux première et deuxième parties (100A) et (100B) et servant à entraîner à la fois les première et deuxième parties (100A) et (100B) afin qu'elles fonctionnent dans des premier, deuxième et troisième modes de fonctionnement, et dans lequel
l'ensemble vanne (100) multifonctionnel inclut en outre un corps de vanne (101),
un premier manchon (142) disposé de manière rotative dans le corps de vanne (101), le premier manchon (142) incluant une première partie de manchon (148) et une deuxième partie de manchon (152) qui tournent ensemble autour d'un axe, la première partie de manchon (148) étant conçue pour réguler l'écoulement du premier fluide à travers le corps de vanne (101) et la deuxième partie de manchon (152) étant conçue pour réguler l'écoulement du deuxième fluide à travers le corps de vanne (101), dans lequel le premier manchon (142) est un manchon interne, et dans lequel
l'ensemble vanne (100) comprend en outre un manchon externe (144) enveloppant de manière circonférentielle le premier manchon (142), dans lequel le manchon externe (144) est fixé en rotation par rapport au corps de vanne (101) et le manchon interne (142) est rotatif par rapport au manchon externe (144) **caractérisé en ce que** l'ensemble vanne (100) comprend en outre un joint tubulaire monobloc (146) porté sur un extérieur du manchon externe (144) et ainsi fixé en rotation par rapport au corps de vanne (101), le joint tubulaire (146) rendant étanche le corps de vanne (101) par rapport à chacun parmi le manchon externe (144) et la première partie de manchon (148) et la deuxième partie de manchon (152) du premier manchon (142).

2. Ensemble vanne (100) multifonctionnel selon la revendication 1, **caractérisé par le fait que** le corps de vanne (101) est construit de manière unitaire en plastique.

3. Ensemble vanne (100) multifonctionnel selon la revendication 2, en combinaison avec un corps de filtre (102) et un filtre (62) dans le corps de filtre (102).

4. Ensemble vanne (100) multifonctionnel selon la revendication 3, **caractérisé en ce que** le corps de filtre (102) est en communication fluidique avec l'ensemble vanne (100) multifonctionnel par le biais d'un conduit (104).

5. Ensemble vanne (100) multifonctionnel selon la revendication 3, **caractérisé en ce que** le corps de filtre (102) est couplé au corps de vanne (101).

6. Ensemble vanne (100) multifonctionnel selon la revendication 1, **caractérisé en ce que** le premier manchon (142) inclut une paroi latérale cylindrique (147), et dans lequel la première partie de manchon (148) possède une première extrémité ouverte pour recevoir le premier fluide dans une première partie interne (142A) du premier manchon (142) et la deuxième partie de manchon (152) inclut une deuxième extrémité ouverte pour recevoir le deuxième fluide dans une deuxième partie interne (142B) du premier manchon (142).

7. Ensemble vanne (100) multifonctionnel selon la revendication 6, **caractérisé en ce que** le premier manchon (142) inclut en outre une paroi s'étendant radialement (143) séparant la première partie interne (142A) de la deuxième partie interne (142B).

8. Ensemble vanne (100) multifonctionnel selon la revendication 6, **caractérisé en ce que** le corps de vanne (101) inclut des premier et deuxième orifices de sortie (134, 136) en communication fluidique sélective avec la première partie interne (142A) du premier manchon (142) et des troisième et quatrième orifices de sortie (138, 140) en communication fluidique avec la deuxième partie interne (142B) du premier manchon (142).

9. Ensemble vanne (100) multifonctionnel selon la revendication 6, **caractérisé en ce que** la paroi latérale cylindrique (147) de la première partie de manchon (148) inclut une première ouverture de paroi latérale (150) et la paroi latérale cylindrique (147) de la deuxième partie de manchon (152) inclut une deuxième ouverture de paroi latérale (154), les première et deuxième ouvertures de paroi latérale (152, 154) étant décalées radialement l'une de l'autre et correspondant à des positions ouvertes de vanne.

10. Ensemble vanne (100) multifonctionnel selon la revendication 1, **caractérisé en ce que** le corps de vanne (101) comprend en outre un agencement d'entraînement (126) incluant un moteur d'entraînement commun (128) pour la rotation du premier manchon (142) autour d'un axe du premier manchon (142), l'agencement d'entraînement (126) incluant de préférence un pignon entraîné (182), le pignon entraîné (182) incluant une première partie clavetée qui se met en prise avec une deuxième partie clavetée coopérante du manchon interne (142).

11. Ensemble vanne (100) multifonctionnel selon la revendication 8, **caractérisé en ce que** :
la première ouverture de paroi latérale (150) ne s'aligne radialement avec ni l'un ni l'autre des premier et deuxième orifices de sortie (134, 136) lorsque la première partie (100A) de l'ensemble vanne (100) fonctionne dans le premier mode de fonctionnement,
la première ouverture de paroi latérale (150) s'aligne radialement avec le premier orifice de sortie (134) lorsque la première partie (100A) de l'ensemble vanne (100) fonctionne dans le deuxième mode de fonctionnement,
la première ouverture de paroi latérale (150) s'aligne radialement avec le deuxième orifice de sortie (136) lorsque la première partie (100A) de l'ensemble vanne (100) fonctionne dans le troisième mode de fonctionnement,
la deuxième ouverture de paroi latérale (154) ne s'aligne radialement avec ni l'un ni l'autre des troisième et quatrième orifices de sortie (138, 140) lorsque la deuxième partie (100B) de l'ensemble vanne (100) fonctionne dans le premier mode de fonctionnement,
la deuxième ouverture de paroi latérale (154) s'aligne radialement avec le troisième orifice de sortie (138) lorsque la deuxième partie (100B) de l'ensemble vanne (100) fonctionne dans le deuxième mode de fonctionnement, et
la deuxième ouverture de paroi latérale (154) s'aligne radialement avec le quatrième orifice de sortie (140) lorsque la deuxième partie (100B) de l'ensemble vanne (100) fonctionne dans le troisième mode de fonctionnement.

12. Système de gestion des eaux usées (10) d'un véhicule, comprenant l'ensemble vanne (100) multifonctionnel selon la revendication 8, dans lequel le premier fluide est constitué d'eaux grises et le deuxième fluide est constitué d'eaux noires.

13. Système de gestion des eaux usées (10) selon la revendication 12, **caractérisé en ce que** l'ensemble vanne (100) est conçu de sorte que :
dans son premier mode de fonctionnement, la première partie (100A) de l'ensemble vanne (100) fonctionne pour fermer à la fois les premier et deuxième orifices de sortie (134, 136) vis-à-vis de l'écoulement d'eaux grises pour rendre les eaux grises disponibles pour la chasse d'eau de toilettes (22) ;
dans son deuxième mode de fonctionnement, la première partie (100A) de l'ensemble vanne (100) fonctionne pour fermer le premier orifice de sortie (134) et ouvrir le deuxième orifice de sortie (136) pour diriger les eaux grises provenant d'un filtre (62) en retour vers un réservoir d'eaux grises (14) du système de gestion des eaux usées (10) ;
dans son troisième mode de fonctionnement, la première partie (100A) de l'ensemble vanne (100) fonctionne pour ouvrir le premier orifice de sortie (134) et fermer le deuxième orifice de sortie (136) de sorte que les eaux grises provenant du filtre (62) soient refoulées vers un réservoir d'eaux noires (12) du système de gestion des eaux usées (10) ;
dans son premier mode de fonctionnement, la deuxième partie (100B) de l'ensemble vanne (100) fonctionne pour fermer à la fois les troisième et quatrième orifices de sortie (138, 140) vis-à-vis de l'écoulement d'eaux noires au sein du système de gestion des eaux usées (10) ;
dans son deuxième mode de fonctionnement, la deuxième partie (100B) de l'ensemble vanne (100) fonctionne pour ouvrir le troisième orifice de sortie (138) et fermer le quatrième orifice de sortie (140) pour renvoyer les eaux noires provenant du réservoir d'eaux noires (12) vers le réservoir d'eaux noires (12) ; et
dans son troisième mode de fonctionnement, la deuxième partie (100B) de l'ensemble vanne (100) fonctionne pour fermer le troisième orifice de sortie (138) et ouvrir le quatrième orifice de sortie (140) pour le refoulement des eaux noires provenant du réservoir d'eaux noires (12) vers un adaptateur de refoulement (74).

14. Procédé de fonctionnement de l'ensemble vanne (100) multifonctionnel selon l'une des revendications 1 à 11 précédentes, le procédé étant **caractérisé par** :
la rotation du premier manchon (142) autour de l'axe du premier manchon (142) avec le moteur commun (128) pour entraîner simultanément les première et deuxième parties (100A) et (100B) de l'ensemble vanne (100) afin qu'elles fonctionnent dans les premier, deuxième et troisième modes de fonctionnement respectifs.
